# DEMANDE DE BREVET EUROPEEN

(11) **EP 4 793 701 A1**
(43) Date de publication de la demande: **19.08.2026**
(21) Numéro de dépôt: 26159361.0
(22) Date de dépôt: 18.02.2026
(51) Int. Cl.: G03B 17/08, B60S 1/54, G02B 27/00, B08B 5/02, G03B 30/00

(54) **SYSTÈME DE PROTECTION POUR CAMÉRA**

(30) Priorité: 18.02.2025 FR 2501666
(71) Demandeur: Sonceboz Automotive S.A., 2605 Sonceboz-Sombeval (CH)
(72) Inventeur: PAJOT, Olivier, 2605 SONCEBOZ-SOMBEVAL (CH); VEREZ, Guillaume, 2605 SONCEBOZ-SOMBEVAL (CH); LUGAZ, Coline, 2605 SONCEBOZ-SOMBEVAL (CH)
(74) Mandataire: IP Trust

(57) **Abrégé**

La présente invention concerne un système de protection d'une lentille (250) de caméra (400) contre les projections de particules solides et liquides, comprenant un ventilateur (300) produisant un flux d'air transmis en direction de ladite lentille (250) par l'intermédiaire d'un conduit d'acheminement (110),
caractérisé en ce que
- ledit ventilateur (300) est du type centrifuge
- ledit système comprend une boîte fluidique (1) intégrée creuse entourée par une enveloppe étanche continue définissant :
∘ une volute (100) entourant la turbine dudit ventilateur (300),
∘ une chambre (200)
∘ un conduit d'acheminement (110) constitué par un volume creux reliant ladite volute (100) à ladite chambre (200)

- ladite chambre (200) débouchant en périphérie de ladite lentille (250) par au moins une ouverture annulaire (130) pour générer un flux d'air dans la direction du champ optique de la lentille, ladite chambre (200) entourant également une partie au moins du corps de ladite caméra (400).

## Description

### Domaine de l'invention

La présente invention concerne le domaine de la protection de la lentille d'une caméra contre les salissures ou la pluie, qui peuvent perturber la vision. Elle concerne en particulier les caméras utilisées pour des fonctions de sécurité sur des véhicules autonomes par exemple, dont la parfaite vision doit être assurée de manière automatique pour assurer la qualité de l'acquisition des informations relatives à l'environnement du véhicule. Ces caméras sont exposées aux intempéries et aux perturbations occasionnelles telles que la pluie, des éclaboussures, des insectes qui peuvent impacter la lentille et perturber l'acquisition des images.

On a développé des solutions consistant à souffler de l'air devant la lentille pour chasser les particules incidentes.

### État de la technique

On connaît par exemple dans l'état de la technique la demande de brevet US 2024/181997 décrivant un ensemble buse de caméra servant à nettoyer une lentille de caméra. L'ensemble buse de caméra comprend une monture de fixation et un ensemble buse. La monture de fixation comprend une ouverture de caméra destinée à la lentille de caméra et peut être montée sur un véhicule. L'ensemble buse est relié à la monture de fixation et comprend une buse de pulvérisation et un conduit d'air. La buse de pulvérisation décharge un liquide de nettoyage, et le conduit d'air décharge de l'air comprimé, chacun étant déchargé à un angle étroit par rapport à une lentille de caméra. Le liquide de nettoyage et l'air comprimé coopèrent pour éliminer de la matière étrangère de la surface extérieure de la lentille de caméra, éventuellement de caméras de pare-chocs avant, de caméras de vue latérale, de caméras de pare-chocs arrière et de caméras de fonctionnement semi-autonome et autonome de véhicules de tourisme, de camions, de bus et de véhicules utilitaires.

La demande de brevet WO2018130610A1 concerne un dispositif de caméra pour un véhicule automobile comprenant une caméra pour détecter une zone environnementale du véhicule automobile, la caméra ayant au moins une lentille, comprenant un dispositif de retenue pour retenir la caméra sur le véhicule automobile, et comprenant un dispositif de nettoyage pour nettoyer une surface externe du dispositif de lentille, le dispositif de nettoyage comprenant un élément de ventilateur qui est disposé sur le dispositif de retenue et qui est conçu pour fournir un flux d'air pour nettoyer la surface extérieure du dispositif de lentille.

La demande de brevet EP3006278 se rapporte à un dispositif de nettoyage d'une lentille (8) de caméra d'un véhicule automobile adaptée à réaliser des prises de vue selon un axe optique longitudinal, comportant une tête de nettoyage disposée dans une position fixe par rapport à la caméra et présentant une forme générale annulaire, d'axe confondu avec l'axe de la lentille. La tête de nettoyage comporte une paroi annulaire interne disposée selon l'axe optique en aval de la lentille et porteuse de moyens de nettoyage orientés vers la lentille. La paroi annulaire interne de la tête st munie d'au moins une pluralité de buses par lesquelles un fluide est apte à sortir en direction de la lentille. La tête de nettoyage comporte une fente d'évacuation s'étendant radialement depuis la paroi annulaire interne vers l'extérieur de la tête, ladite fente étant disposée verticalement en bas de la tête dans la position fixe de la tête par rapport à la caméra

### Inconvénients de l'art antérieur

Les solutions de l'art antérieur ne sont pas totalement satisfaisantes car elles impliquent un encombrement important : le volume du système de nettoyage est dimensionné pour permettre d'inclure la caméra dans le flux d'air, ce qui oblige à concevoir un boîtier dont la dimension est nettement supérieure à celle de la caméra. Pour des applications de véhicules autonomes, les caméras sont logées dans des espaces restreints, par exemple le rétroviseur, les montants latéraux, le parechoc avant, le coffre arrière, ce qui n'est pas compatible avec des solutions de l'art antérieur.

D'autres solutions de l'art antérieur prévoient d'alimenter la chambre annulaire par un tuyau amenant de l'air sous pression depuis un réservoir d'air sous pression. Ces solutions impliquent de mettre en place un système de tuyauterie fluidique complexe, source de pannes et de disfonctionnements et difficile à installer dans un véhicule. Les dispositifs de l'art antérieur destinés au nettoyage ont besoin d'un flux d'air radial par rapport à la lentille et très proche de la lentille, ce qui les rend fragiles.

En outre, ces solutions conduisent à des pertes de charge significatives.

### Solution apportée par l'invention

Afin de remédier à cet inconvénient la présente invention concerne un système de protection d'une lentille de caméra contre les projections de particules solides et liquides présentant les caractéristiques énoncés par la revendication 1 notamment.

Un tel système de protection comprend un ventilateur produisant un flux d'air transmis en direction de ladite lentille par l'intermédiaire d'un conduit d'acheminement caractérisé en ce que ledit ventilateur est du type centrifuge et ledit système comprend une boîte fluidique intégrée creuse entourée par une enveloppe étanche continue définissant une volute entourant la turbine dudit ventilateur, une chambre et un conduit d'acheminement constitué par un volume creux reliant ladite volute à ladite chambre. Cette chambre débouche en périphérie de ladite lentille par au moins une ouverture annulaire pour générer un flux d'air dans la direction du champ optique de la lentille. Cette chambre entoure également une partie au moins du corps de ladite caméra. L'ouverture annulaire présente une section tubulaire en amont d'un plan transversal et une partie divergente en aval de ce plan.

En particulier, elle concerne un système de nettoyage présentant tout ou partie des caractéristiques suivantes :
- le conduit d'acheminement se divise en deux branches, une branche reliant la sortie du ventilateur à l'entrée de la chambre et l'autre branche reliant la sortie du ventilateur à l'entrée d'une seconde chambre entourant une seconde lentille d'une seconde caméra lesdites branches constituant également un prolongement dudit ventilateur et/ou de ladite seconde chambre.
- l'entrée d'air du ventilateur débouche dans un volume contenant le stator d'un moteur électrique pilotant le ventilateur. Le flux d'air en entrée du ventilateur peut refroidir le stator du moteur. Pour refroidir la caméra, c'est plutôt le flux d'air au niveau de la chambre qui sera utilisé.
- le bord frontal de la chambre est en arrière du plan transversale passant par le sommet de la lentille.
- l'ouverture annulaire présente une lèvre périphérique définissant sa surface extérieure, ladite lèvre périphérique présentant une paroi extérieure évasée, avec une base sensiblement cylindrique se prolongeant avec une partie aval divergente,
- l'ouverture, α, de la partie aval divergente est comprise entre 30° et 120°.
- l'ouverture annulaire présente pour sa paroi intérieure, par une surface cylindrique, constituée soit par la surface périphérique de la lentille de la caméra, soit par une bague entourant la lentille de la caméra pour définir une géométrie précise.
- la surface cylindrique s'étendant jusqu'à un plan transversal et en aval du plan transversal l'ouverture annulaire est définie pour sa paroi intérieure par une surface brutalement divergente, constituée soit par la surface périphérique de la lentille de la caméra, soit par une bague entourant la lentille de la caméra pour définir une géométrie précise.
- Le système de protection d'une lentille comporte un moyen de pilotage du moteur dudit ventilateur en fonction de la vitesse de déplacement d'un véhicule équipé dudit système et/ou d'un détecteur de pluie et/ou d'un moyen de traitement des images acquises par ladite caméra pour caractériser des salissures dans le champ optique de ladite caméra.

### Description détaillée d'un exemple non limitatif de réalisation

La présente invention sera mieux comprise à la lecture de la description qui suit, concernant un exemple non limitatif de réalisation illustré par les dessins annexés où :
[FIG. 1] La figure 1 représente une vue en perspective de haut d'un premier exemple de réalisation d'un système selon l'invention,
[FIG. 2] La figure 2 représente une vue en perspective de côté d'un second exemple de réalisation d'un système selon l'invention avec deux caméras,
[FIG. 3] La figure 3 représente une vue en perspective de haut d'un second exemple de réalisation d'un système selon l'invention avec deux caméras,
[FIG. 4] La figure 4 représente une vue en coupe de la boîte fluidique du second exemple de réalisation d'un système selon l'invention,
[FIG. 5] La figure 5 représente une vue en coupe détaillée du canal fluidique au niveau d'une caméra,
[FIG. 6] La figure 6 représente une schématisation de l'écoulement fluidique autour de la lentille d'une caméra.

### Principe général

Le principe général de l'invention consiste à réaliser le système de nettoyage sous la forme d'un système intégré comprenant une boîte fluidique (1) intégrée formant un composant fluidique en matière plastique intégrant, dans le même composant trois parties fonctionnelles complémentaires, à savoir :
- une volute (100) canalisant le flux d'air produit par un ventilateur centrifuge (300)
- un conduit d'acheminement (110) du flux d'air entre la volute (100) et une chambre (200).
- cette chambre (200) débouchant en périphérie de ladite lentille (250) par au moins une ouverture (130) présentant une section tubulaire en amont d'un plan transversal (265) et une partie divergente en aval de ce plan. Cet agencement conduit à générer un flux d'air dans la direction du champ optique de la lentille (250).

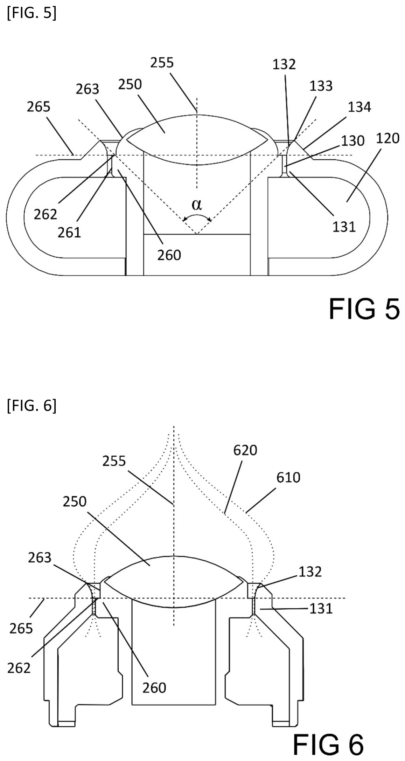

Cette forme particulière permet de créer le flux d'air montré sur la figure 6 et sert à empêcher que des salissures atteignent la lentille, sans nécessite un flux d'air très proche de la lentille afin de la nettoyer.

La chambre (200) entoure de préférence la lentille (250) et éventuellement une partie du corps de la caméra (400). On obtient ainsi un ensemble intégré réduisant les pertes de charge et présentant un encombrement très réduit permettant de se loger au plus près de la caméra (400), autour de la lentille (250). Cette boîte fluidique (1) intégrée peut être réalisé par assemblage par soudure de pièces thermoformées ou moulées pour former une enveloppe étanche dans laquelle vient s'insérer d'une part le ventilateur centrifuge (300) et d'autre part la caméra (400). Comme il sera expliqué ultérieurement, cette boîte fluidique (1) intégrée peut aussi présenter une pluralité de chambres (200) pour le nettoyage des lentilles de plusieurs caméras, avec une volute (100) unique et un conduit d'acheminement unique (110) et commun à plusieurs chambres toroïdales (200).

On entend par flux d'air généré dans la direction du champ optique de la lentille (250), un flux d'air décrit par un champ de vecteurs dont la direction principale est selon l'axe optique de la lentille

Dans le brevet, le terme amont se réfère, pour un élément disposé sur le chemin du flux d'air, à la partie traversée par ce flux d'air avant d'arriver à cet élément. Le terme aval se réfère à la partie traversée par ce flux d'air après cet élément.

### Description détaillée d'un exemple non limitatif de réalisation

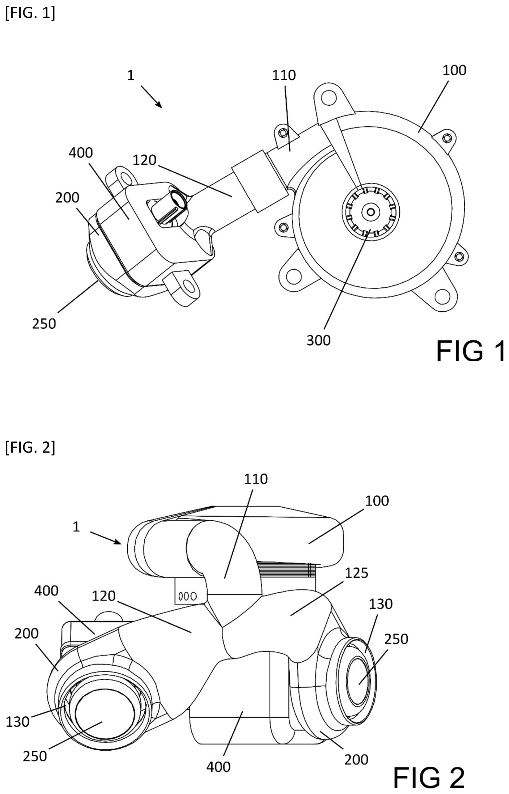

La figure 1 illustre un exemple de réalisation d'un système de nettoyage d'une caméra en vue de haut.

La boîte fluidique (1) est formée par un composant en matière plastique creux définissant, avec une peau enveloppante unique :
- une volute (100) dans laquelle est inséré un module de ventilateur centrifuge (300)
- un conduit d'acheminement (110)
- une chambre (200).

La volute (100) présente une forme spirale pour recevoir une turbine aspirant l'air axialement, et rejetant l'air de manière centrifuge dans le volume défini par la volute (100). L'air produit dans la volute (100) débouche dans un segment de la boîte fluidique (1) formant un conduit d'acheminement (110) se prolongeant par une branche (120) débouchant dans une chambre (200).La chambre (200) entoure la lentille (250) d'une caméra (400). Elle se termine en aval par une ouverture annulaire, non visible, pour produire un flux d'air sur la périphérie de la lentille (250).

Cette chambre (200) peut entourer partiellement le corps de la caméra (400), de sorte à en assurer en partie le refroidissement, à améliorer la fixation mécanique entre ces deux éléments, ou encore l'étanchéité de la boîte fluidique

### Description détaillée d'un second exemple de réalisation

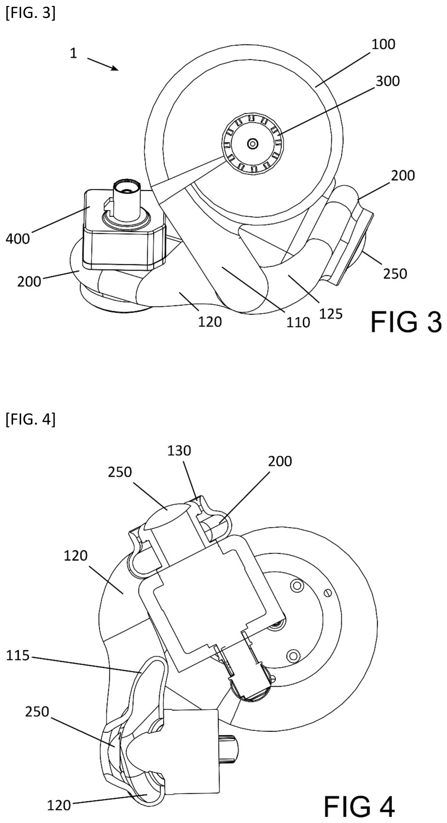

Les figures 2 et 3 illustrent un exemple de réalisation d'un système de nettoyage destiné à deux caméras, respectivement en vue en perspective de côté et de haut.

Ce mode de réalisation diffère du mode de réalisation précédent en ce que la boîte fluidique (1) comporte deux chambres (200), le conduit d'acheminement (110) se divisant en deux branches (120, 125) débouchant chacune dans une desdites chambres (200).

Chacune de ces chambres (200) entoure la lentille (250) d'une caméra (400). Elle se termine en aval par une ouverture annulaire (130) pour produire un flux d'air sur la périphérie de la lentille (250).

### Description détaillée de la chambre

Les figure 4 et 5 représentent une vue détaillée de la chambre (200). Elle communique avec le conduit d'acheminement (100) par une zone de raccordement (115) dimensionnée pour éviter toute perte de charge.

La paroi aval de la chambre (200) présente une ouverture annulaire (130) dont la section est légèrement supérieure à la section de la lentille (250), de façon à préserver une fente périphérique autour de cette lentille (250).

Le bord de cette ouverture annulaire (130) est bordé par une lèvre périphérique (131) assurant la déflexion du jet d'air, de façon à produire un jet en forme de torche, ou de flamme, coaxiale avec l'axe optique (255) de la lentille (250), ou éventuellement orienté angulairement par rapport à cet axe optique (255).

Pour obtenir un flux d'air en forme de torche, l'ouverture annulaire présente une partie amont préférentiellement de forme tubulaire et une partie aval divergente, c'est à-dire qui présente une augmentation de sa section.

Un exemple de réalisation de la lèvre périphérique (131) est illustré par la figure 4. Elle présente une paroi extérieure évasée, avec une base sensiblement cylindrique se prolongeant avec une partie aval divergente (132). Cette partie aval divergente (132) présente une arête (133). L'angle d'ouverture, α, de la partie aval divergente (132) est comprise entre 30° et 120°. Cette arête (133) guide l'écoulement jusqu'à sa sortie et permet, par effet de paroi, connu sous le nom d'effet Coanda, d'évaser l'écoulement. L'angle d'ouverture, α,est un paramètre que le concepteur peut choisir afin d'évaser plus ou moins le flux d'air (le jet d'air).

L'ouverture annulaire(130) est également définie, pour sa paroi intérieure (260), par une surface cylindrique (261), constituée soit par la surface périphérique de la lentille de la caméra, soit par une bague entourant la lentille de la caméra pour définir une géométrie précise. La surface cylindrique (261) s'étendant jusqu'à un plan transversal (265) passant par la zone d'inflexion entre la partie amont tubulaire et la partie aval divergente. La surface cylindrique se termine par une arête (262) transversale. En aval du plan transversal (265), l'ouverture annulaire (130) est définie, pour sa paroi intérieure, par une surface divergente (263), constituée soit par la surface périphérique de la lentille (250) de la caméra, soit par une bague entourant la lentille de la caméra pour définir une géométrie précise.

La largeur de l'ouverture annulaire (130), au niveau de la partie aval tubulaire, est comprise entre 0,3 et 2 millimètres.

En fonction des contextes d'utilisation de l'invention, la lèvre périphérique (131) ou la paroi intérieure (261), peuvent présenter une géométrie dissymétrique.

Le fonctionnement du moteur du ventilateur est optionnellement commandé en fonction de paramètres tels que la vitesse de déplacement du véhicule équipée du système de nettoyage ou de caractéristiques de l'image captée par la caméra ou par des informations météorologiques.

Comme le montre la figure 6, l'arête (262) constitue pour l'écoulement d'air une discontinuité brusque ce qui empêche l'effet Coanda d'attachement du flux d'air à la paroi de la lentille (250). L'écoulement proche de la paroi intérieure (260) poursuit ainsi son trajet dans la direction de l'axe optique, ce qui permet d'évaser le flux d'air total et confère une protection accrue de la lentille en augmentant la taille de la zone de déviation des particules. Comme illustré en figure 5 et 6, la surface divergente (263) de la paroi intérieure (260) peut être continument divergente, ou présenter une zone sans divergence, la rupture de l'effet Coanda étant provoquée par la discontinuité brusque de la paroi intérieure (260) au niveau du plan transversal (265).

L'exemple de réalisation à deux caméras n'est qu'à titre d'illustration et aucunement limitatif de l'invention, il est tout à fait envisageable de garder le bénéfice de la compacité lorsque le système de ventilation n'est associé qu'à une caméra.

Dans certains cas de figure il est également intéressant d'augmenter le nombre de caméra à proximité et l'invention peut se décliner en adaptant le système de ventilation au débit requis en fonction du nombre de caméra à protéger.

De manière encore non limitative, il est possible d'utiliser le flux d'air généré par le système de ventilation pour refroidir des composants intégrés dans l'environnement proche.

Il est également possible d'utiliser les calories dissipées par les composants à refroidir, ou par le ventilateur, ou encore de générer des calories à l'aide d'un dispositif résistif intégré au système, pour augmenter la température du flux d'air généré au niveau des caméras. Ceci permet, par exemple, de favoriser l'évacuation de la condensation sur la lentille lors de la mise en route, ou faire fondre la glace accumulée par temps froid. De manière plus spécifique, il est possible d'intégrer un mélangeur d'air entre un flux directement en provenance du système de ventilation et un autre flux ayant été dérivé dans un système chauffant, de sorte à avoir un contrôle fin sur la température de l'air généré au niveau des caméras.

Également, dans le cas où de multiples caméras sont protégées par le dispositif, il est possible d'adapter le débit dispensé sur chaque caméra, soit de manière passive par dimensionnement des différents conduits, ou soit de manière active par l'utilisation d'un mécanisme d'obturation piloté. Ceci est particulièrement intéressant lorsque l'orientation ou la position des caméras impliquent des besoins différents en termes d'énergie du flux d'air pour les protéger.

La présente invention consiste à générer un flux d'air de direction principale selon l'axe optique (255) de la lentille (250) de norme supérieure à sa composante tangentielle. La forme de flux d'air préférée et celle d'une flamme qui présente une géométrie axisymétrique, mais il est tout à fait possible, en modifiant la géométrie de l'ouverture annulaire de générer un flux incliné par rapport à l'axe optique (255) ou encore de générer un flux d'air non axisymétrique pour favoriser la déviation de particules selon une direction.

En outre l'invention prévoit également d'adapter le débit du flux d'air généré par le ventilateur, en fonction de paramètres contextuels, comme la vitesse du véhicule, la détection de pluie, la détection de l'approche d'un autre véhicule, la température extérieure, la détection de la nature de l'intempérie, pluie, neige, grêle, brouillard, brume, ou encore de taille des particules à dévier.

Enfin de manière préférentielle la prise d'air du ventilateur est orientée vers une partie protégée de l'environnement qui permet d'éviter d'aspirer de l'air chargé en particules d'eau, ou d'aspirer de l'eau stagnant dans une poche à proximité.

## Revendications

1. Système de protection d'une lentille (250) de caméra (400) contre les projections de particules solides et liquides, comprenant un ventilateur (300) produisant un flux d'air transmis en direction de ladite lentille (250) par l'intermédiaire d'un conduit d'acheminement (110), **caractérisé en ce que**
- ledit ventilateur (300) est du type centrifuge
- ledit système comprend une boîte fluidique (1) intégrée creuse entourée par une enveloppe étanche continue définissant :
∘ une volute (100) entourant la turbine dudit ventilateur (300),
∘ une chambre (200)
∘ un conduit d'acheminement (110) constitué par un volume creux reliant ladite volute (100) à ladite chambre (200)
- ladite chambre (200) débouchant en périphérie de ladite lentille (250) par au moins une ouverture annulaire (130) présentant une section tubulaire en amont d'un plan transversal (265) et une partie divergente en aval de ce plan, pour générer un flux d'air dans la direction du champ optique de la lentille.

2. Système de protection d'une lentille selon la revendication 1 **caractérisé en ce que** le conduit d'acheminement (110) se divise en deux branches (120, 125), une branche (120) reliant la sortie du ventilateur (300) à l'entrée de la chambre (200) et l'autre branche (125) reliant la sortie du ventilateur (300) à l'entrée d'une seconde chambre entourant une seconde lentille (250) d'une seconde caméra (400) lesdites branches (120, 125) constituant également un prolongement dudit ventilateur (300) et/ou de ladite seconde chambre (200).

3. Système de protection d'une lentille (250) selon la revendication 1 ou 2 **caractérisé en ce que** l'entrée d'air du ventilateur (300) débouche dans un volume contenant le stator d'un moteur électrique pilotant le ventilateur.

4. Système de protection d'une lentille (250) selon la revendication 1 **caractérisé en ce que** le bord frontal de la chambre (200) est en arrière du plan transversale passant par le sommet de la lentille.

5. Système de protection d'une lentille (250) selon la revendication 1 **caractérisé en ce que** ladite chambre (200) entourant également une partie au moins du corps de ladite caméra (400).

6. Système de protection d'une lentille (250) selon la revendication 1 **caractérisé en ce que** l'ouverture annulaire (130) présente une lèvre périphérique (131) définissant sa surface extérieure, ladite lèvre périphérique (131) présentant une paroi extérieure évasée, avec une base sensiblement cylindrique se prolongeant avec une partie aval divergente (132).

7. Système de protection d'une lentille (250) selon la revendication précédente **caractérisé en ce que** l'ouverture, α, de la partie aval divergente (132) est comprise entre 30° et 120°.

8. Système de protection d'une lentille (250) selon la revendication 1 **caractérisé en ce que** l'ouverture annulaire (130) présente pour sa paroi intérieure (260), par une surface cylindrique (261), constituée soit par la surface périphérique de la lentille de la caméra, soit par une bague entourant la lentille de la caméra pour définir une géométrie précise.

9. Système de protection d'une lentille (250) selon la revendication précédente **caractérisé en ce que** la surface cylindrique (261) s'étendant jusqu'à un plan transversal (265) et en aval du plan transversal (265), l'ouverture annulaire (130) est définie pour sa paroi intérieure par une surface brutalement divergente (263), constituée soit par la surface périphérique de la lentille (250) de la caméra, soit par une bague entourant la lentille de la caméra pour définir une géométrie précise.

10. Système de protection d'une lentille selon la revendication 1 **caractérisé en ce qu'**il comporte un moyen de pilotage du moteur dudit ventilateur en fonction de la vitesse de déplacement d'un véhicule équipé dudit système et/ou d'un détecteur de pluie et/ou d'un moyen de traitement des images acquises par ladite caméra pour caractériser des salissures dans le champ optique de ladite caméra.
